# EUROPÄISCHE PATENTSCHRIFT

(11) **EP 4 427 629 B1**
(45) Veröffentlichungstag und Bekanntmachung des Hinweises auf die Patenterteilung: **06.05.2026**
(21) Anmeldenummer: 24161833.9
(22) Anmeldetag: 06.03.2024
(51) Int. Cl.: A45D 24/30, A46B 11/00

(54) **SÄUBERUNGSVORRICHTUNG ZUM ENTFERNEN VON ALLERGENPARTIKELN AUS HAAREN**
CLEANING DEVICE FOR REMOVING ALLERGEN PARTICLES FROM HAIR
DISPOSITIF DE NETTOYAGE POUR ENLEVER DES PARTICULES ALLERGÈNES DES CHEVEUX

(30) Priorität: 06.03.2023 EP 23160307
(43) Veröffentlichungstag der Anmeldung: 11.09.2024
(73) Patentinhaber: hayaway GmbH, 10713 Berlin (DE)
(72) Erfinder: Redmann, Maximilian, 10713 Berlin (DE)
(74) Vertreter: noventive Patentanwaltsgesellschaft mbH

(56) Entgegenhaltungen:
- IT-A1- MI20 111 560
- US-A- 4 013 086
- US-A1- 2022 061 518
- US-B2- 6 595 219

## Beschreibung

Die Erfindung betrifft eine Säuberungsvorrichtung zum Entfernen von Allergenpartikeln, insbesondere zum Entfernen der Allergenpartikel aus menschlichen oder tierischen Haaren.

Allergenpartikel sind für Allergiker eine schwere Belastung. Insbesondere Menschen, die auf bestimmte Pollen allergisch reagieren, sind saisonal durch allergische Reaktionen infolge des Kontakts mit Allergenpartikeln, beispielsweise mit verschiedenen Blütenpollen, belastet und beeinträchtigt. Um die allergische Reaktion und/oder deren Symptome zu lindern oder zu bekämpfen, sind verschiedene Verfahren und Arzneimittel bekannt.

Antihistaminika als Arzneistoff sind in Apotheken erhältlich und können von Fach- und Allgemeinärzten per Rezept verordnet werden. Dies wird insbesondere bei stark auftretenden Symptomen durchgeführt. Die meisten der als Antihistaminika verwendeten Wirkstoffe verstärken Müdigkeit und machen schläfrig. Darüber hinaus wirken diese Stoffe nicht gegen eine bestimmte Allergie, sondern blockieren einen Mechanismus der auftretenden Symptome, indem sie die Bindungsstellen von Histamin blockieren.

Ein weiteres bekanntes Behandlungsverfahren ist die sogenannte Hyposensibilisierung. Bei diesem Verfahren, das bei Immunglobulin E-vermittelten Typ-I-Allergien anwendbar ist, werden dem menschlichen Körper über einen Zeitraum von mehreren Jahren in unterschiedlichen Abständen Allergenextrakte zugeführt. Dies führt langfristig zu einer Gewöhnung an das jeweilige Allergen, so dass die allergische Reaktion schlussendlich ausbleibt oder wenigstens abgeschwächt wird. Dieses Verfahren ist sehr zeitaufwendig, da die behandelte Person in der Anfangszeit wöchentlich und später in monatlichen Abständen das Allergenextrakt in Form von Spritzen verabreicht bekommt. Jede dieser Behandlungen ist wiederum zeitaufwändig, da die behandelte Person nach der Verabreichung der Allergenextrakte einen gewissen Zeitraum, meistens 30 Minuten, bei dem behandelnden Arzt warten muss, da sich in dieser Zeit möglicherweise ein anaphylaktischer Schock einstellen könnte.

Zur Linderung häufig auftretender Symptome, beispielsweise Rötung und Jucken der Augen, laufende Nase oder häufiges Niesen, sowie asthmatischer Auswirkungen auf die Lunge, sind beispielsweise Augentropfen und Nasenspray bekannt. Oft wird in diesen Präparaten Cortison verwendet, so dass sie nach Möglichkeit nicht über einen langen Zeitraum oder dauerhaft eingenommen werden sollen.

Erhältlich sind darüber hinaus homöopathische Behandlungsverfahren und Produkte, zum Beispiel Akupunktur oder Schwarzkümmelöl, die ebenfalls Symptome abschwächen sollen. Wissenschaftlich ist eine Wirkung dafür allerdings nicht bewiesen.

Eine weitere Herausforderung ist, dass jede behandelte Person unterschiedlich auf Behandlungsformen und Heilmittel reagiert, so dass der Erfolg individuell sehr stark schwanken kann. Viele Personen werden von Antihistaminika schläfrig, allerdings wird auch die allergische Reaktion stark verringert. Andere Personen bleiben wach, spüren allerdings auch keinen großen Effekt der symptomatischen Behandlung.

Für Pollenallergiker ist täglich die Stärke des Pollenflugs relevant, der tagsüber meistens stärker ist als nachts. Pollenpartikel gelangen also, sofern man sich tagsüber oder auch nachts außerhalb der Wohnung aufhält, an und in den menschlichen Körper, insbesondere an die Schleimhäute, wo sie allergische Reaktionen auslösen.

Pollenallergiker mit Kopfhaaren haben insbesondere das Problem, dass die Pollenpartikel sich in ihren Haaren verfangen können und dadurch mit in die Wohnung getragen werden. Auch Kleidung, die viele Fasern aufweist, kann zu einem Polleneintrag in die Wohnung führen. Falls der Allergiker sich nicht unmittelbar nach Eintreffen zu Hause die Haare wäscht, können die Pollenpartikel in die Räume der Wohnung und auch in Mobiliar gelangen. Die allergischen Wirkstoffe der Pollenpartikel können über mehrere Monate in dem Pollenpartikel überdauern und auch nach diesem Zeitraum allergische Reaktionen auslösen.

Daher wird allgemein empfohlen, dass Pollenallergiker sich nicht in ihrem Schlafzimmer umziehen, sondern ihre Kleidung möglichst im Bad oder in Räumen, in denen sie nicht schlafen, wechseln. So wird die Menge Pollen, die insbesondere in die Schlafräume gelangt, beschränkt. So soll vermieden werden, dass insbesondere die nächtliche Ruhephase nicht von allergischen Reaktionen unterbrochen wird. Darüber hinaus wird empfohlen, unverzüglich Haare, Gesicht und Nackenpartie zu waschen, um die Pollen gründlich zu entfernen. Ein mehrfaches Auswaschen der Haare kann allerdings dazu führen, dass die Haarstruktur zerstört wird. Daher möchten Menschen ein zu häufiges Waschen der Haare weitestgehend vermeiden. Auch bei mehrmaligem Verlassen des Hauses im Tagesverlauf würde ständiges Haarewaschen sowohl die Gesundheit als auch den geregelten Tagesablauf beeinträchtigen.

Aus der US 4 013 086 A ist ein im Wesentlichen symmetrisch faltbares Kammgehäuse bekannt, in das ein flaches Filtermaterial einklemmbar ist.

Aus der ITMI 10 2011 901 974 697 und der IT MI20 111 560 A1 ist ein Kamm mit einem im Bereich der Kammzähne angeordneten tränkbaren Filz zum Auftrag von Pflegeflüssigkeiten auf Haare bekannt, wobei der Kamm einen Flüssigkeitsbehälter zum Bereithalten der Pflegeflüssigkeit aufweisen kann.

In der DE 20 2012 000 354 U1 ist eine Haarbürste zur Aufnahme von Schmutz beschrieben.

Aus der EP 3 838 065 A1 ist eine Haarbürste mit mittels eines Drehknopfes ausfahrbaren Borsten bekannt.

In der US 2022/061518 A1 ist eine Bürste zur Entfernung von Tierhaaren beschrieben, die eine austauschbare Einrichtung aufweist, an der Tierhaare anhaften.

Aus der US 6 595 219 B2 ist eine Haarbürste mit versenkbaren Borsten bekannt.

Vor diesem Hintergrund hat die Erfindung die Aufgabe, eine einfach verwendbare Vorrichtung zum Entfernen von Allergenpartikeln aus Haaren bereitzustellen, die die oben genannten Nachteile vermeidet.

Die Aufgabe wird durch eine Säuberungsvorrichtung gemäß Patentanspruch 1 gelöst. Weitere vorteilhafte Ausgestaltungen sind Gegenstand der abhängigen Ansprüche.

Zur Lösung der Aufgabe wird eine Säuberungsvorrichtung zum Entfernen von Pollen- und/oder Allergenpartikeln aus menschlichen und tierischen Haaren vorgeschlagen, die eine Griffeinrichtung und eine mit dieser lösbar verbundene Partikelaufnahmeeinrichtung aufweist, wobei die Partikelaufnahmeeinrichtung eine Abnahmeeinrichtung zum Abnehmen der Pollen- und/oder Allergenpartikel von den Haaren aufweist.

Eine derartige Vorrichtung erlaubt es einem Allergiker, Pollen, die durch den Alltag in das Kopfhaar gelangen, einfach und schnell zu entfernen. Eine derartige Reinigung und Säuberung der Haare unterstützt vorbeugend die Vermeidung von allergischen Reaktionen im häuslichen Bereich und verhindert diese wenn möglich gänzlich.

Dadurch kann auch die Notwendigkeit einer weiteren Behandlung, beispielsweise mit Antihistaminika, reduziert werden.

In einigen Ausführungsformen kann die Säuberungsvorrichtung als Bürste, aufweisend wenigstens ein Gehäuseteil, ausgestaltet sein, die eine Vielzahl von Borsten aufweist, wobei die Partikelaufnahmeeinrichtung eine Vielzahl von Öffnungen zur Durchführung der Borsten aufweist, wodurch die Partikelaufnahmeeinrichtung auf die Borsten aufsteckbar ist.

Dadurch, dass die Borsten durch die Öffnungen der Partikelaufnahmeeinrichtung ragen, wird ein guter Kontakt zwischen Haaren und der Partikelaufnahmeeinrichtung sichergestellt.

In einigen Ausführungsformen weist eines der Gehäuseteile einen wenigstens teilweise umlaufenden und vorspringenden Rand auf, der eine mechanische Rast- oder Klemmvorrichtung zur lösbaren Befestigung der Partikelaufnahmeeinrichtung aufweist. Dadurch ist eine besonders einfache Montage der Partikelaufnahmeeinrichtung an dem Gehäuseteil möglich. Es ist also für den Benutzer besonders einfach, die Partikelaufnahmeeinrichtung zu wechseln. Insbesondere wird keinerlei Werkzeug dafür benötigt.

In einigen Ausführungsformen ist in einem Bereich des Randes eine Eingriffsmulde vorgesehen, in die ein Werkzeug und/oder ein Finger zum Entfernen der Partikelaufnahmeeinrichtung aus der mechanischen Rast- oder Klemmvorrichtung einführbar ist.

Dadurch wird für den Benutzer das Wechseln der Partikelaufnahmeeinrichtung weiter vereinfacht.

Die Borsten sind auf einem beweglichen Borstenhalter angeordnet, wobei der Borstenhalter so innerhalb der Gehäuseteile beweglich ist, dass die Borsten aus dem Gehäuseteil ein- und ausfahrbar sind, wobei die Borsten derart in das Gehäuseteil einfahrbar sind, dass sie nicht oder nur geringfügig aus der Partikelaufnahmeeinrichtung und/oder dem Gehäuseteil herausragen.

Dadurch sind die Borsten vollständig oder nahezu vollständig in das Gehäuseteil verfahrbar. Somit benötigt eine derartige Bürste beim Transport weniger Platz und die Borsten sind vor äußeren Einflüssen geschützt.

In einigen Ausführungsformen weist die Bürste einen Drehabschnitt auf, der mittels eines Linearkonverters an einen Führungsschlitten gekoppelt ist, der Führungsöffnungen zur Aufnahme eines Abschnitts des Borstenhalters, insbesondere eines Führungszapfens, aufweist, wobei die Vermittlung des Linearkonverters und des Führungsschlittens so ausgestaltet ist, dass sie eine Drehbewegung des Drehabschnitts in eine Linearbewegung des Borstenhalters und damit der Borsten aus dem Gehäuseteil hinaus oder in dieses hinein umsetzt.

Dies bewirkt eine besonders exakte Bedienbarkeit der Bürste. Durch Drehen des Drehabschnitts können die Borsten exakt so weit wie gewünscht aus der Bürste herausgeschoben werden. Darüber hinaus sind keine von außen zugänglichen Schiebemechanismen notwendig, die sich beispielsweise beim Transport in Kleidung oder anderen Dingen verhaken und dadurch betätigt werden könnten.

In einigen Ausführungsformen sind die Borsten in ihren Extrempositionen, also in einem komplett ausgefahrenen Zustand und in einem komplett eingefahrenen Zustand, lösbar fixierbar.

So wird vermieden, dass die Borsten aus den Borstenführungsöffnungen rutschen, wenn sie in das Gehäuse eingefahren sind, was die Handhabung der Bürste 100 verbessert. So ist es auch möglich, dass die Außenoberfläche bei eingefahrenen Borsten eben ist, da die Borsten komplett ohne Sicherheitsmarge in das Gehäuse eingefahren werden können.

In einigen Ausführungsformen betragen Abstände von Schwerpunkten der Borsten beispielsweise 0,75cm bis 2,5cm, 1cm bis 1,5cm, 1,2cm bis 1,5cm, 1cm, 1,2cm, 1,25cm oder 1,5 cm.

Zwischen den Borsten ist dadurch ausreichend Platz für eine möglichst große Kontaktfläche der Abnahmeeinrichtung.

In einigen Ausführungsformen sind die Borsten in einem Raster oder in gegeneinander versetzten Linien angeordnet sind, wobei eine Zeile eines Rasters oder eine Linie 2 bis 8, 3 bis 5 oder 3 bis 4 Borsten umfasst, und wobei 10 bis 15, 11 bis 12 oder 11 Zeilen oder Linien vorgesehen sind.

Dadurch wird die erhöhte Adhäsion der Abnahmeeinrichtung, durch die das Durchführen der Bürste durch die Haare erschwert wird, teilweise kompensiert und wenigstens nicht durch eine Vielzahl von Borsten die Benutzung der Bürste weitere erschwert.

Die Aufgabe wird des Weiteren durch eine Säuberungsvorrichtung gemäß Anspruch 8 gelöst. Dabei ist die Säuberungsvorrichtung als Kamm ausgestaltet, wobei die Griffeinrichtung ein Griffteil und die Partikelaufnahmeeeinrichtung ein Kammteil das Zinken aufweist, aufweist, wobei das Kammteil wenigstens eine Vertiefung als Aufnahme für eine Abnahmeeinrichtung aufweist.

Dadurch, dass die Abnahmeeinrichtung in eine Vertiefung angeordnet ist, wird ein Verschieben oder Abziehen der Abnahmeeinrichtung während der Benutzung, beispielsweise durch Adhäsion an Haaren, erschwert.

Die wenigstens eine Aufnahme erstreckt sich über eine Seitenfläche des Kammteils, wobei die Seitenfläche durch eine Basis von Zinken begrenzt ist.

Dadurch sind die Zinken an sich frei und dienen der Führung der Haare entlang des Kammes.

In einigen Ausführungsformen ist wenigstens eine Aufnahme in einer zwischen zwei Zinken angeordneten Kontaktfläche angeordnet.

Da die Haare zwischen den Zinken hindurchgeführt werden, ist die Fläche zwischen den Zinken für die Haare besonders exponiert. Eine Partikelaufnahmeeinrichtung, die in eine derartige Aufnahme eingesetzt ist, ist an dieser Stelle besonders effizient nutzbar.

In einigen Ausführungsformen beträgt ein Abstand zwischen zwei Zinken mehr als 12mm, mehr als 15mm oder mehr als 17mm und/oder weist das Kammteil drei, vier, fünf, sechs, sieben, acht, neun, zehn, elf oder zwölf Zinken auf und/oder weisen die Zinken eine konische oder pyramidenartige Grundform auf.

Diese Ausgestaltungen bewirken eine möglichst effiziente Säuberung der Haare, da die derart ausgeführten Zinken besonders einfach durch die Haare zu führen sind. Darüber hinaus weisen derartige Ausführungsformen besonders große Kontaktflächen auf, mit denen die Haare in Berührung kommen können.

Weitere Merkmale und Varianten der Erfindung sind aus den beigefügten Figuren ersichtlich, die Erfindungsformen der Erfindung lediglich schematisch zeigen. Es zeigen im Einzelnen:
- Fig. 1: eine Seitenansicht einer Säuberungsvorrichtung nicht gemäß einer Ausführungsform der vorliegenden Erfindung;
- Fig. 2: eine isometrische Ansicht der Säuberungsvorrichtung aus Fig. 1;
- Fig. 3: eine Frontansicht der Säuberungsvorrichtung aus Fig. 1;
- Fig. 4: eine Seitenansicht einer Säuberungsvorrichtung nicht gemäß einer weiteren Ausführungsform der vorliegenden Erfindung;
- Fig. 5: eine isometrische Ansicht der Säuberungsvorrichtung aus Fig. 4;
- Fig. 6: eine Frontansicht der Säuberungsvorrichtung aus Fig. 4;
- Fig. 7: eine Explosionszeichnung einer als Bürste ausgestalteten Säuberungsvorrichtung gemäß einer Ausführungsform der vorliegenden Erfindung;
- Fig. 8: eine isometrische Ansicht auf eine Säuberungsvorrichtung gemäß Fig. 7 mit ausgefahrenen Borsten;
- Fig. 9: einen Längsschnitt durch eine Säuberungsvorrichtung gemäß Fig. 7 mit eingefahrenen Borsten;
- Fig. 10: einen Längsschnitt durch eine Säuberungsvorrichtung gemäß Fig. 7 mit ausgefahrenen Borsten;
- Fig. 11: eine Seitenansicht einer als Kamm ausgestalteten Säuberungsvorrichtung gemäß einer Ausführungsform der vorliegenden Erfindung;
- Fig. 12: einen Schnitt durch die Säuberungsvorrichtung gemäß Fig. 11;
- Fig. 13: eine Explosionszeichnung der Säuberungsvorrichtung gemäß Fig. 11 mit Abnahmeeinrichtungen;
- Fig. 14: eine isometrische Ansicht des Griffteils einer Säuberungsvorrichtung gemäß Fig. 11;
- Fig. 15: eine isometrische Ansicht des Kammteils einer Säuberungsvorrichtung gemäß Fig. 11 und
- Fig. 16: eine 3D-Ansicht auf eine Unterseite des Griffteils aus Fig. 14.

Die Figuren enthalten teilweise vereinfachte, schematische Darstellungen. Zum Teil werden für gleiche oder funktionsgleiche, aber gegebenenfalls nicht identische Elemente identische Bezugszeichen verwendet. Verschiedene Ansichten gleicher Elemente können unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

Des Weiteren schließt in der Beschreibung und den Patentansprüchen die Formulierung "wenigstens teilweise" den Begriff "vollständig" ein. Die Formulierung "ein" schließt die Formulierung "wenigstens ein" mit ein, soweit nicht explizit etwas anderes ausgeführt ist.

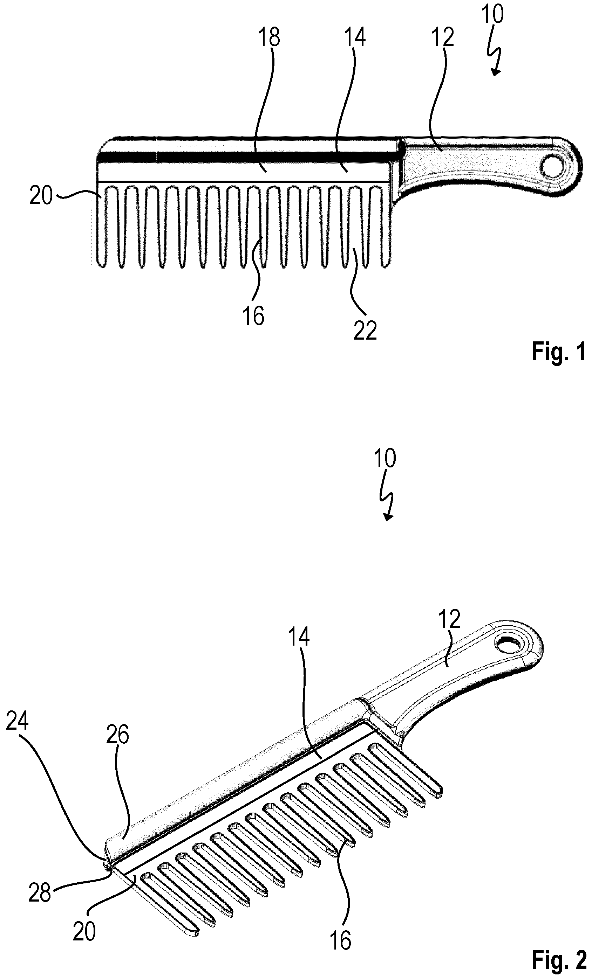

Eine in Fig. 1 gezeigte Säuberungsvorrichtung 10 die nicht der Erfindung entspricht, weist eine Griffeinrichtung 12 und eine Partikelaufnahmeeinrichtung 14 auf. Die Partikelaufnahmeeinrichtung 14 weist 6 Eingreifeinrichtungen 16 auf, die von einem Basisabschnitt 18 parallel zueinander abragen. Die Eingreifeinrichtungen 16 sind entlang einer Geraden aufgereiht angeordnet. Die Partikelaufnahmeeinrichtung 14 ist von einer Abnahmeeinrichtung 20 bedeckt, die eine Rückhalteschicht aus Mikrofasergewebe aufweist. Das Mikrofasergewebe hat die Eigenschaft, Allergenpartikel, beispielsweise Pollenpartikel, anzuziehen, so dass diese an der Rückhalteschicht haften oder verkleben.

Zwischen den Eingreifeinrichtungen 16 ist jeweils ein Durchführabschnitt 22 vorgesehen. Der Durchführabschnitt 22 ist so ausgestaltet, dass Haare, die durch diesen hindurchgeführt werden, möglichst großflächig mit der Abnahmeeinrichtung 20 und somit der Rückhalteschicht in Berührung kommen.

Die Säuberungsvorrichtung 10 bildet somit eine Art Kamm, mittels dessen Allergenpartikel aus Haaren entfernt werden können. Dazu wird die Säuberungsvorrichtung 10 genauso wie ein Kamm mehrfach durch die Haare geführt. So kommt die Rückhalteschicht der Abnahmeeinrichtung 20, die wenigstens einen Teil von Oberflächen der Eingreifeinrichtungen 16, beispielsweise Oberflächen der Zinken des Kammes, bedeckt, mit der Oberfläche möglichst vieler Haare in Berührung. Dabei werden die Allergenpartikel von der Rückhalteschicht der Abnahmeeinrichtung 20 von den Haaren abgenommen und in der Rückhalteschicht zurückgehalten.

Wenn die Abnahmeeinrichtung 20 eine gewisse Anzahl von Allergenpartikeln aufgenommen hat, wird ihre Effizienz reduziert. Je nachdem, welches Material für die Rückhalteschicht verwendet wird, kann die Abnahmeeinrichtung 20 dann gesäubert werden. Kann das Material nicht gesäubert werden, dann muss die Partikelaufnahmeeinrichtung 14 durch eine neue Partikelaufnahmeeinrichtung 14 ausgetauscht werden.

In einigen Ausführungsformen ist es möglich, dass die Abnahmeeinrichtung 20 beispielsweise an der Partikelaufnahmeeinrichtung 14 lösbar befestigt ist, so dass lediglich die Abnahmeeinrichtung 20 ausgetauscht werden muss.

Die Säuberungsvorrichtung 10 ist zur Entfernung von Pollenpartikeln aus menschlichen Haaren, Kunststoffhaaren und tierischen Haaren geeignet. Die Griffeinrichtung 12 dient dazu, die Säuberungsvorrichtung 10 zu halten und sie zur Entfernung von Pollenpartikeln bewegen und führen zu können.

Die Partikelaufnahmeeinrichtung 14 kann ausgewechselt werden, sobald ein in der Abnahmeeinrichtung 20 verwendetes Filtermaterial eine maximale Pollenpartikelaufnahmekapazität erreicht hat. Die Eingreifeinrichtungen 16 der Partikelaufnahmeeinrichtung 14 können Zinken, Zähne, Zacken oder Stäbchen bilden, welche durch die Haare geführt werden, um gleichzeitig möglichst viele Haare zu berühren und durch eine Kämmbewegung die den Haaren anhaftenden Pollenpartikel in das Filtermaterial der Abnahmeeinrichtung 20 zu bürsten oder zu kämmen.

Um einen Austausch der Partikelaufnahmeeinrichtung 14 zu ermöglichen, weisen die Griffeinrichtung 12 und die Partikelaufnahmeeinrichtung 14, wie in **Fig. 2** gezeigt, ineinander einsteckbare erste und zweite Befestigungsabschnitte 24, 26 auf. Der erste Befestigungsabschnitt 24 weist eine im Wesentlichen kreiszylindrische Form auf. Der zweite Befestigungsabschnitt 26 weist eine Ausnehmung auf, in die der erste Befestigungsabschnitt 24 entlang einer Achse der kreiszylindrischen Form einführbar ist. Der zweite Befestigungsabschnitt 26 der Griffeinrichtung 12 umgreift in dieser Ausführungsform also den ersten Befestigungsabschnitt 24 der Partikelaufnahmeeinrichtung 14. Darüber hinaus weist der zweite Befestigungsabschnitt 26 eine Nut 28 auf, an der die Eingreifeinrichtungen 16 durch den zweiten Befestigungsabschnitt 26 hindurchtreten können.

Zum Austausch der Partikelaufnahmeeinrichtung 14 wird die Partikelaufnahmeeinrichtung 14 entlang der Achse aus dem zweiten Befestigungsabschnitt 26 herausgezogen und im Anschluss eine neue Partikelaufnahmeeinrichtung 14 in den zweiten Befestigungsabschnitt 26 hineingeschoben.

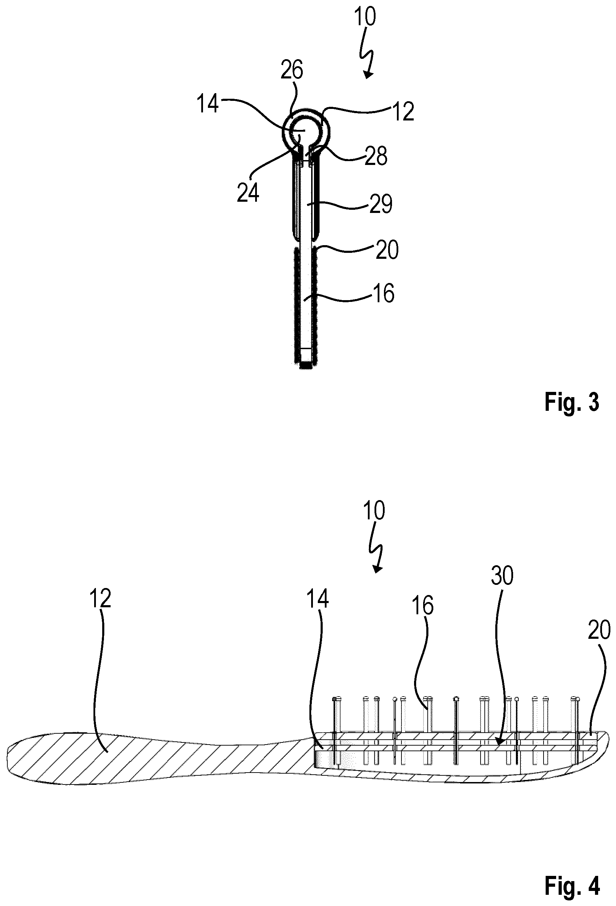

Wie in dem Schnitt in **Fig. 3** erkennbar, weist die Partikelaufnahmeeinrichtung 14 eine Grundstruktur 29 auf, die der Partikelaufnahmeeinrichtung 14 Stabilität gibt. An Oberflächen der Grundstruktur 29 ist die Abnahmeeinrichtung 20 angeordnet. Dadurch benötigt die Abnahmeeinrichtung 20 keine eigene Stabilität und kann einfacher aufgebaut werden.

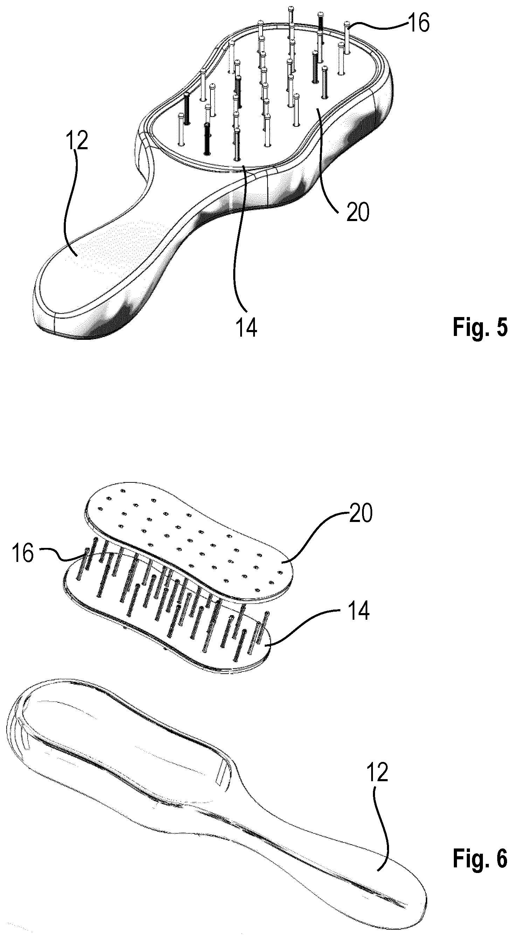

In weiteren Ausführungsformen, von denen eine in den **Fig. 4 bis 6** dargestellt ist, weist die Partikelaufnahmeeinrichtung 14 eine erste Seite 30 auf, auf der die Eingreifeinrichtungen 16 verteilt sind. In diesen Ausführungsformen die nicht der Erfindung entsprechen, bildet die Säuberungsvorrichtung 10 also eine Bürste, insbesondere eine Haarbürste. Die Abnahmeeinrichtung 20 ist so ausgestaltet, dass die Eingreifeinrichtungen 16 sie durchdringen. Zu diesem Zweck weist die Abnahmeeinrichtung 20 Öffnungen auf. Dadurch ergibt sich, dass die Abnahmeeinrichtung 20 auf die Eingreifeinrichtungen 16 aufsteckbar ist.

Die Partikelaufnahmeeinrichtung 14 kann in der Griffeinrichtung 12 lösbar befestigt sein. Zum Lösen der Partikelaufnahmeeinrichtung 14 kann beispielsweise ein Druckknopf oder eine sonstige Betätigungseinrichtung vorhanden sein.

Die Abnahmeeinrichtung 20 ist zur temporären Befestigung beispielsweise lediglich an den Eingreifeinrichtungen 16 festgeklemmt. In einigen Ausführungsformen kann beispielsweise eine einfache lösbare Verbindung, beispielsweise eine Klemm- oder Clipsverbindung zur Befestigung der Abnahmeeinrichtung 20 vorgesehen sein.

In einigen Ausführungsformen weist die Abnahmeeinrichtung 20 beispielsweise einen Mikrofaserstoff, ein Mikrofasergewebe, einen Mikrofaservliesstoff oder allgemein einen Vliesstoff oder ein Gewebe auf. Mikrofaservliesstoff ist besonders gut zur Verwendung in der Abnahmeeinrichtung 20 geeignet, da er im Mikrometerbereich viele dicht gepackte Fasern aufweist, an denen Allergenpartikel hängen bleiben können. Darüber hinaus können Mikrofaservliesstoffe so ausgestaltet werden, dass sie eine elektrostatische Aufladung aufweisen, durch welche die Allergenpartikel angezogen werden. Gesundheitsgefährdende Eigenschaften für den Menschen sind bei diesem Material nicht bekannt.

Die Erfindung ist nicht nur geeignet, menschliche Haare zuverlässig von Allergenpartikeln zu säubern, sondern auch beispielsweise Haare von Tieren nach einem Spaziergang. Dadurch kann verhindert werden, dass sich Allergenpartikel, insbesondere Pollen, in einer Wohnung ausbreiten. Somit wird die Notwendigkeit, Symptome mittels Medikamenten behandeln zu müssen, verringert. Darüber hinaus ist die Säuberungsvorrichtung 10 portabel und kompakt verstaubar, so dass sie sehr leicht an unterschiedliche Orte mitgenommen werden kann.

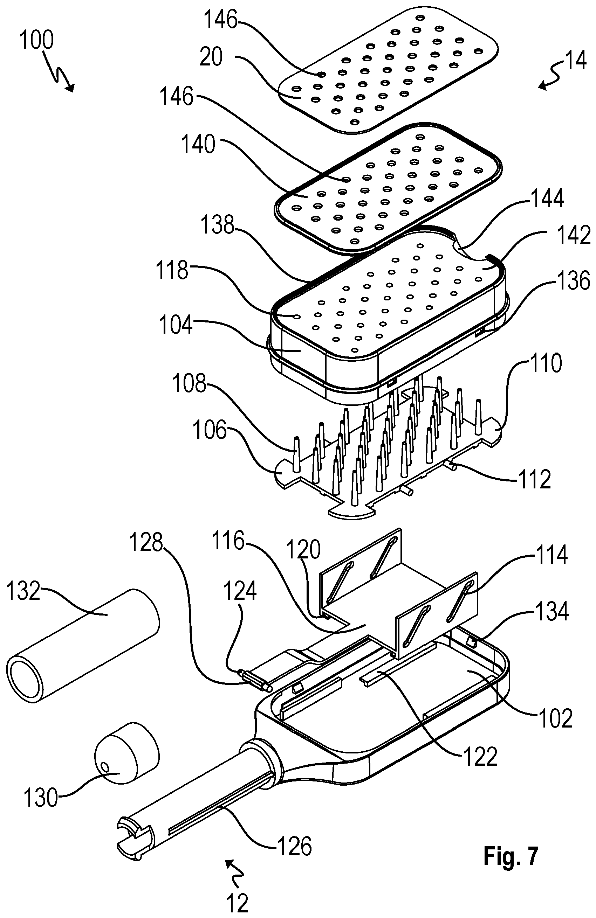

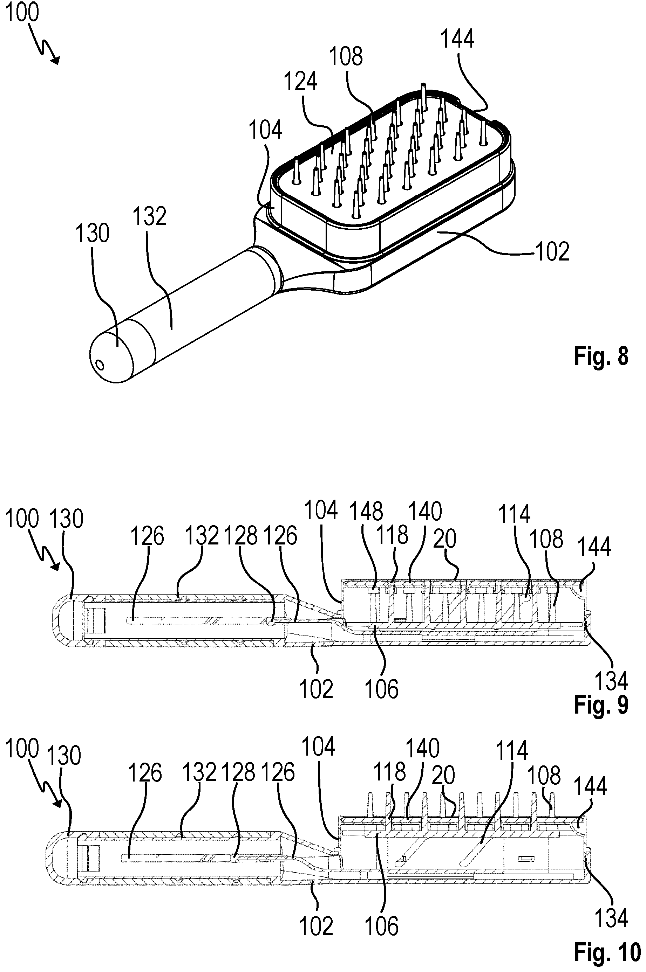

In einigen Ausführungsformen kann die Säuberungsvorrichtung 10 als Bürste 100, wie sie als Beispiel in **Figs. 7 bis 10** gezeigt ist, ausgebildet sein. Die Bürste 100 weist ein aus einem unteren Gehäuseteil 102, das den Griffabschnitt 12 aufweist, und einem oberen Gehäuseteil 104 gebildetes Gehäuse und einen Borstenhalter 106, an dem die als Borsten 108 ausgestalteten Eingreifeinrichtungen 16 angeordnet sind, auf.

Eine Grundfläche des Borstenhalters 106 ist so ausgestaltet, dass er an seinen Rändern Führungsabschnitte 110 aufweist. Die Führungsabschnitte 110 sind so geformt, dass sie mit Seitenflächen zur Führung an Wänden der Gehäuseteile 102, 104 anliegen können. Dadurch können diese Führungsabschnitte 110 beispielsweise der Anordnung und Führung des Borstenhalters 106 in den Gehäuseteilen 102, 104 dienen. In diesem Ausführungsbeispiel hat der Borstenhalter im Wesentlichen ein Rechteck mit abgerundeten Ecken als Grundfläche, wobei an den Seiten Ausnehmungen angeordnet sind und die Führungsabschnitte 110 durch die abgerundeten Ecken gebildet sind. Das Gehäuseteil 104 kann darüber hinaus Führungsschienen aufweisen, die entlang einer Verschieberichtung der Borsten 108 durch die Borstenführungsöffnungen 118 verlaufen, so dass die einzelnen Borsten 108 dauerhaft zu den jeweiligen Borstenführungsöffnungen 118 und/oder Löchern in dem Gehäuseteil 104 zentriert sind und diesen gegenüber nicht verrutschen können.

Die Borsten 108 sind mit in dem oberen Gehäuseteil 104 angeordneten Borstenführungsöffnungen 118 fluchtend angeordnet, so dass sie, sobald die Borsten 108 in den Borstenführungsöffnungen 118 angeordnet sind, in ihrer Beweglichkeit derart eingeschränkt sind, dass sie sich im Wesentlichen nur durch die Borstenführungsöffnungen 118 hindurch vor und zurück bewegen können. Die Borsten 108 und damit auch der mit ihnen verbundene Borstenhalter 106 sind also auch mittels der Borstenführungsöffnungen 118 geführt.

Die Borsten 108 können so ausgestaltet sein, dass sie im eingefahrenen Zustand mit einer Außenoberfläche, beispielsweise einer Außenoberfläche der Partikelaufnahmeeinrichtung 14, fluchten und dadurch beispielsweise eine im Wesentlichen ebene Oberfläche zu bilden.

Die Borsten 108 können flexibel oder fest ausgestaltet sein. Die Borsten 108 können beispielsweise eine konische Form aufweisen.

Gegenüber einer herkömmlichen Haarbürste ist die Zahl der Borsten 108 reduziert, so dass die Borsten 108 größer ausgestaltet und mit einem größeren Abstand voneinander angeordnet werden können. Dadurch wird eine große Kontaktfläche bei weiterhin angenehmer Benutzung erreicht. Darüber hinaus erhöht sich die nutzbare Fläche der Abnahmeeinrichtung 20.

In einigen Ausführungsformen kann eine Anzahl der Borsten 108 beispielsweise 25 bis 50, 30 bis 45, 35 bis 40 oder 39 betragen. In einigen Ausführungsformen sind die Borsten 108 auf dem Borstenhalter 106 beispielsweise in einem Raster oder in gegeneinander versetzten Linien angeordnet, wobei eine Zeile eines Rasters oder eine Linie beispielsweise 2 bis 8, 3 bis 5 oder 3 bis 4 Borsten 108 umfasst, wobei beispielsweise 10 bis 15, 11 bis 12 oder 11 Zeilen oder Linien vorgesehen sein können, die beispielsweise jeweils eine unterschiedliche Anzahl an Borsten 108 umfassen können. In einigen Ausführungsformen kann ein Abstand zwischen Mittelpunkten und/oder Mittelachsen der Borstenführungsöffnungen 118 und somit auch zwischen Schwerpunkten und/oder, bei rotationssymmetrischen Borsten 108, Mittelachsen der Borsten 108 beispielsweise 0,75cm bis 2,5cm, 1cm bis 1,5cm, 1,2cm bis 1,5cm, 1cm, 1,2cm, 1,25cm oder 1,5 cm betragen. In einigen Ausführungsformen sind die Borsten 108 von einem Außenrand des Borstenhalters 106 beispielsweise wenigstens 6mm oder wenigstens 8mm beabstandet. Durch diese Dimensionen ist offensichtlich, dass die Bürste 100 gewöhnlich größer ist als herkömmliche Haarbürsten.

An Langseiten des Borstenhalters 106 sind Führungszapfen 112 angeordnet, die in Führungsöffnungen 114 eines Führungsschlittens 116 einsetzbar sind. Der Führungsschlitten 116 weist an einer von dem Borstenhalter 106 abgewandten Seite erste Führungsschienen 120 auf, die in zweite Führungsschienen 122, die in dem unteren Gehäuseteil 104 angeordnet sind, eingreifend angeordnet sind. Durch dieses Eingreifen der Führungsschienen 120, 122 ineinander ist der Führungsschlitten 116 nur in einer entlang der Führungsschienen 120, 122 verlaufenden Steuerrichtung verschiebbar.

Der Führungsschlitten 116 weist in einem Aktuierungsbereich 128 zweite Führungszapfen 124 auf, die in Langlöcher 126, die in einem Griffbereich des unteren Gehäuseteils 102 angeordnet sind, eingreifen. Die Langlöcher 126 sind so angeordnet und ausgerichtet, dass der Führungsschlitten 116 linear entlang der Steuerrichtung verschiebbar ist.

Der Borstenhalter 106 ist in der Steuerrichtung nicht verschiebbar, da er mit seinen Führungsabschnitten 110 in dieser Richtung an einem der Gehäuseteile 102, 104 anliegt. Gleichzeitig sind die Führungszapfen 112 des Borstenhalters 106 in die Führungsöffnungen 114 eingesetzt. Wird der Führungsschlitten 116 in der Steuerrichtung verschoben, dann folgen die Führungszapfen 112 der Form der Führungsöffnungen 114. Die Führungsöffnungen 114 sind beispielsweise als Langlöcher ausgeführt, die in einem Winkel zu der Steuerrichtung angeordnet sind.

In einigen Ausführungsformen weisen die Führungsöffnungen 114 beispielsweise endseitig einen kurzen, parallel zu der Steuerrichtung angeordneten Halteabschnitt auf. Der Halteabschnitt kann derart ausgestaltet sein, dass die Führungszapfen 112 in wenigstens einer ihrer Endstellungen so einrasten können, dass eine erhöhte Bedienkraft notwendig ist, um sie aus der Endstellung herauszubewegen. Gleichzeitig kann dadurch bewirkt werden, dass beispielsweise der Borstenhalter 106 zur Benutzung in der ausgefahrenen Position der Borsten 108 temporär festgestellt ist.

In einigen Ausführungsformen kann der Drehabschnitt 132 durch eine kleine Mulde im Drehmechanismus innerhalb des Drehabschnitts am höchsten Punkt des Aus- und Einfahrens der Borsten 108 durch einen Rast- und/oder Klemm-Mechanismus stabilisiert und/oder fixiert sein. Dies dient dazu, dass die Borsten 108 bei Kontakt mit den Haaren und der Kopfhaut nicht direkt wieder einfahren oder nicht aus Versehen aus dem Gehäuse ausfahren. Eine Gegenbewegung löst die Stabilisierung oder Fixierung einfach und erlaubt wieder eine Bewegung der Borsten 108.

Durch die Langlöcher sowie die Führung durch die Gehäuseteile 102, 104 wird der Borstenhalter 106 mit seinen Borsten 108 durch die Borstenführungsöffnungen 118 senkrecht zu der Steuerrichtung bewegt, wenn der Führungsschlitten 116 in der Steuerrichtung bewegt wird. Die Borstenführungsöffnungen 118 und somit auch die Borsten 108 sind beispielsweise in Zeilen und/oder Spalten angeordnet, wobei die Zeilen und/oder Spalten zueinander jeweils versetzt angeordnet sein können.

Die Borsten 108 sind mittels des Führungsschlittens 116 so in das Gehäuse einfahrbar, dass sie nicht aus der Partikelaufnahmeeinrichtung 14 und/oder den Öffnungen 118 des oberen Gehäuseteils 104 herausragen. An einer Innenseite des Gehäuseteils 104 können Borstenführungen 148 vorgesehen sein, die die Borsten 108 auch dann in Position halten, wenn sie in das Gehäuse eingefahren sind. So wird vermieden, dass die Borsten 108 aus den Borstenführungsöffnungen 118 rutschen, wenn sie in das Gehäuse eingefahren sind, was die Handhabung der Bürste 100 verbessert. So ist es auch möglich, dass die Außenoberfläche bei eingefahrenen Borsten 108 eben ist, da die Borsten 108 komplett ohne Sicherheitsmarge in das Gehäuse eingefahren werden können. In einigen Ausführungsformen sind die Borstenführungen 148 als kurze, hohlzylinderartige, einen inneren Rand der Borstenführungsöffnungen 118 umlaufend angeordnete Vorsprünge ausgebildet.

Zum Bedienen des Führungsschlittens ist ein Drehabschnitt 132 vorgesehen, der mittels eines Abschlussabschnittes 130 abgeschlossen ist. Eine von einem Bediener ausgeführte Drehbewegung des Drehabschnitts 132 wird mittels eines darin integrierten Linearkonverters in eine Bewegung in Steuerrichtung umgesetzt. Durch Drehen des Drehabschnitts 132 können somit die Borsten 108 aus dem oberen Gehäuseteil 104 ausgefahren und in dieses beispielsweise komplett eingefahren werden.

Die Gehäuseteile 102, 104 können beispielsweise Rastnasen 134 und/oder Rastöffnungen 136 aufweisen, die beim Zusammensetzen der Gehäuseteile 102, 104 ineinander einrasten und so eine ausreichende Belastbarkeit bewirken.

Die Partikelaufnahmeeinrichtung 14 weist neben der Abnahmeeinrichtung 20 einen Träger 140 auf. Die Abnahmeeinrichtung 20 ist an dem Träger 140 angeordnet und befestigt, so dass der Träger 140 die Abnahmeeinrichtung 20 stabilisiert und stützt. Das obere Gehäuseteil 104 weist eine Vertiefung 142 mit einem Rand 138 auf, der wenigstens teilweise einen Klemm- oder Rastvorsprung aufweist, mittels dessen der Träger 140 und/oder die Partikelaufnahmeeinrichtung 14 lösbar in der Vertiefung 142 befestigbar ist. Der Rand 138 kann beispielsweise 1mm bis 3mm, 2mm bis 5mm oder 2mm hoch sein. Die Höhe des Randes 138 kann in einigen Ausführungsformen der Dicke des Trägers 140 und/oder der Partikelaufnahmeeinrichtung 14 angepasst sein.

Um den Zusammenbau der Bürste 100 zu vereinfachen kann der Träger 140 in einem Randbereich, der durch den Rand 138 einklemmbar ist, ohne Abnahmeeinrichtung 20 ausgeführt sein.

Der Träger 140 kann beispielsweise aus einem verformungsbeständigen Material gebildet und weist eine Dicke von beispielsweise 1mm bis 5mm, 2mm bis 3mm oder von 2mm auf.

Die Abnahmeeinrichtung 20 weist insbesondere ein Vliesmaterial auf oder ist durch ein solches gebildet. Das Vliesmaterial sollte derart ausgewählt werden, dass es eine besonders gute Abnahme von Pollen erlaubt. Als ein zu diesem Zweck geeignetes Material hat sich Vliesmaterial aus PP + PAN-Fasern erwiesen.

In einigen Ausführungsformen ist die Abnahmeeinrichtung 20 fest, beispielsweise stoffschlüssig, mit dem Träger 140 verbunden. Zur Aufnahme der Abnahmeeinrichtung 20 und/oder um deren Ausrichtung an dem Träger 140 zu vereinfachen, kann der Träger 140 eine Vertiefung aufweisen, deren Tiefe beispielsweise an die Dicke der Abnahmeeinrichtung 20 angepasst ist. In einigen Ausführungsformen kann eine Tiefe der Vertiefung einer Stärke der Abnahmeeinrichtung 20 entsprechen, so dass sich eine ebene Oberfläche ergibt, oder das Material der Aufnahmeeinrichtung 20 leicht übersteht.

Das obere Gehäuseteil 104 weist darüber hinaus eine Eingriffsmulde 144 auf, in die ein Benutzer beispielsweise mit einem Finger, einer Fingerspitze oder einem geeigneten schmalen Gegenstand eingreifen kann, um die Partikelaufnahmeeinrichtung 14 aus der Vertiefung 142 zu lösen. Auch die Partikelaufnahmeeinrichtung 14 kann einen Eingriffsabschnitt, beispielsweise im Bereich der Eingriffsmulde 144, aufweisen, um ihre Entnahme aus der Vertiefung 142 zu vereinfachen.

Die Partikelaufnahmeeinrichtung 14 weist in dem Träger 140 und der Abnahmeeinrichtung 20 Öffnungen 146 auf, die, wenn die Partikelaufnahmeeinrichtung 14 in der Vertiefung 142 angeordnet ist, mit den Borstenführungsöffnungen 118 fluchten, so dass die Borsten 108 durch das obere Gehäuseteil 104 und die Partikelaufnahmeeinrichtung 14 hindurchgeschoben werden können.

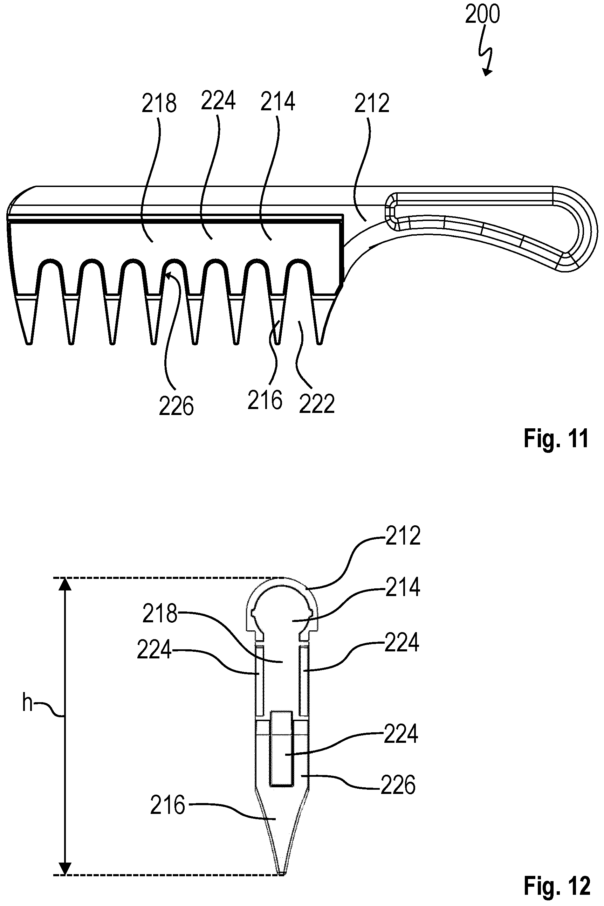

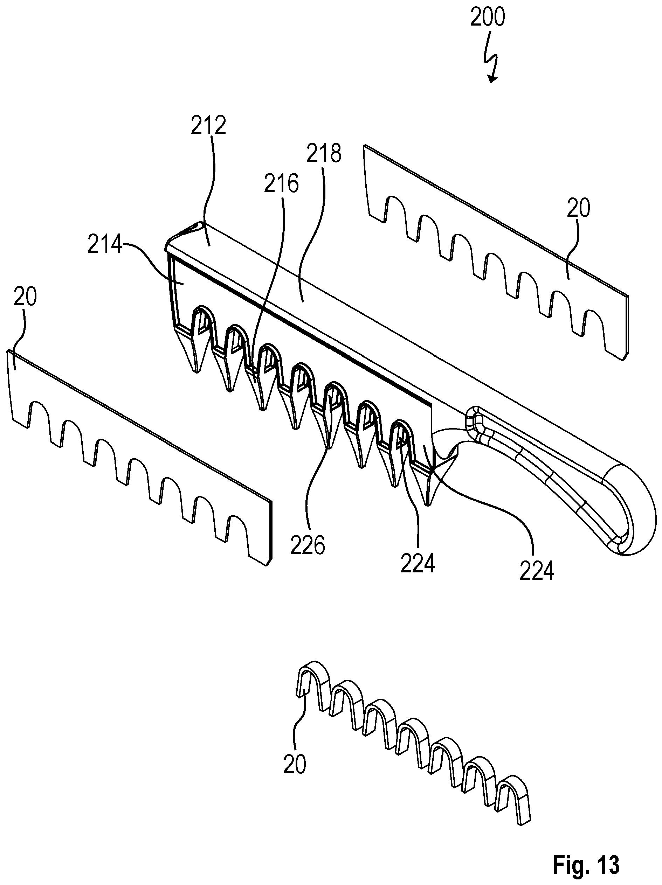

In einigen Ausführungsformen kann die Säuberungsvorrichtung 10 als Kamm 200, wie er als Beispiel in **Figs. 11 bis 16** gezeigt ist, ausgebildet sein. Der Kamm 200 weist als Griffeinrichtung 12 ein Griffteil 212 und als Partikelaufnahmeeinrichtung 14 ein auswechselbares Kammteil 214 auf. Das Kammteil 214 weist einen Basisabschnitt 218 auf, von dem eine Vielzahl von Zinken 216 abragt. Auf wenigstens einer Seite des Basisabschnitts 218 ist eine Aufnahme 224 vorgesehen, in welche eine Aufnahmeeinrichtung 20 einsetzbar ist. Die Zinken 216 des Kammteils 214 bilden Eingreifeinrichtungen 16, zwischen denen Abstände 222 als Durchführabschnitte 22 gebildet sind. Zwischen den Zinken 216 ist als Übergang jeweils eine Kontaktfläche 226 vorgesehen, an der Haare beim Kämmen vorbeigezogen werden.

Die Aufnahmen 224 sind beispielsweise auf beiden Seiten des Basisabschnitts 218 angeordnet. Darüber hinaus ist zwischen den Zinken 216 in wenigstens einer der Kontaktflächen 226 eine Aufnahme 224 angeordnet.

Die Aufnahmen 224 sind beispielsweise als Vertiefungen ausgestaltet und weisen jeweils eine Bodenfläche und/oder Seitenflächen auf, an denen die Abnahmeeinrichtungen 20 befestigbar sind. Dadurch wird insbesondere erreicht, dass die Abnahmeeinrichtungen 20 jeweils sicher an dem Kammteil 214 befestigt sind und sich beispielsweise nicht bei Kontakt mit Haaren durch Adhäsion an diesen aus den Aufnahmen 224 verschieben oder herausziehen lassen. Die Abnahmeeinrichtungen 20 können unlösbar mit Abschnitten der Aufnahmen 224 verbunden sein, beispielsweise stoffschlüssig durch Kleben. Da die Aufnahmen 224 als Vertiefungen ausgestaltet sind, die beispielsweise zwischen 1,5 und 3 mm, zwischen 1,5 und 2,5 mm oder zwischen 1,8 und 2,2 mm tief sind, können sie wenigstens teilweise umlaufende Stützränder aufweisen, an denen die Abnahmeeinrichtung 20 jeweils abstützbar ist.

In einigen Ausführungsformen erstreckt sich der Basisabschnitt 218 beispielsweise über zwischen 50 % und 90 % einer Höhe h des Kammteils 214, so dass die Zinken 216 sich über zwischen 20 % und 50 % der Höhe des Kammteils 214 erstrecken. Zinken 216 können beispielsweise wenigstens abschnittsweise eine sphärische oder konische Form oder die Form einer wenigstens dreiseitigen Pyramide oder einer vierseitigen Pyramide aufweisen.

Anders als bei gewöhnlichen Kämmen, die hauptsächlich der Trennung von Haarsträhnen und zum Auskämmen von Knoten dienen, kann es für die komfortable Nutzung des Kamms 200 vorteilhaft sein, wenn zwischen der Kämmwirkung, also der Ordnung und/oder Anordnung der Haare, und der Säuberungswirkung, beispielsweise in Form der Pollenentfernung ein ausgewogenes Verhältnis besteht. Darüber hinaus kann es vorteilhaft sein, einen Ausgleich zwischen einer Kämmwirkung und der Säuberungswirkung in Form der Pollenaufnahme zu finden. In den Aufnahmen 224 sind Abnahmeeinrichtungen 20 angeordnet, die beispielsweise ein Gewebe, insbesondere ein Mikrofasergewebe, aufweisen können, das bei Berührung mit Haaren eine relativ zu einem herkömmlichen Kammzinken mit glatter Oberfläche erhöhte Haftreibung hat. Um ein ausgewogenes Verhältnis zwischen Kämmwirkung und Säuberungswirkung zu erreichen, ist in einigen Ausführungsformen beispielsweise vorgesehen, dass Spitzen der Zinken 216 einen Abstand von zwischen 1 cm und 2,5 cm, zwischen 1,2 cm und 2,2 cm, zwischen 1,5 cm und 1,9 cm oder zwischen 1,6 cm und 1,8 cm aufweisen. Dadurch weist in einigen Ausführungsformen ein Kammteil 214 beispielsweise lediglich sechs bis acht, drei, vier, fünf, sechs, sieben, acht, neun, zehn, elf oder zwölf Zinken 216 auf. Derartige Ausführungsformen können darüber hinaus besonders große Kontaktflächen mit entsprechend großen Aufnahmeeinrichtungen 20 bereitstellen, die den Säuberungsvorgang wie oben angegeben angenehmer und effizienter gestalten.

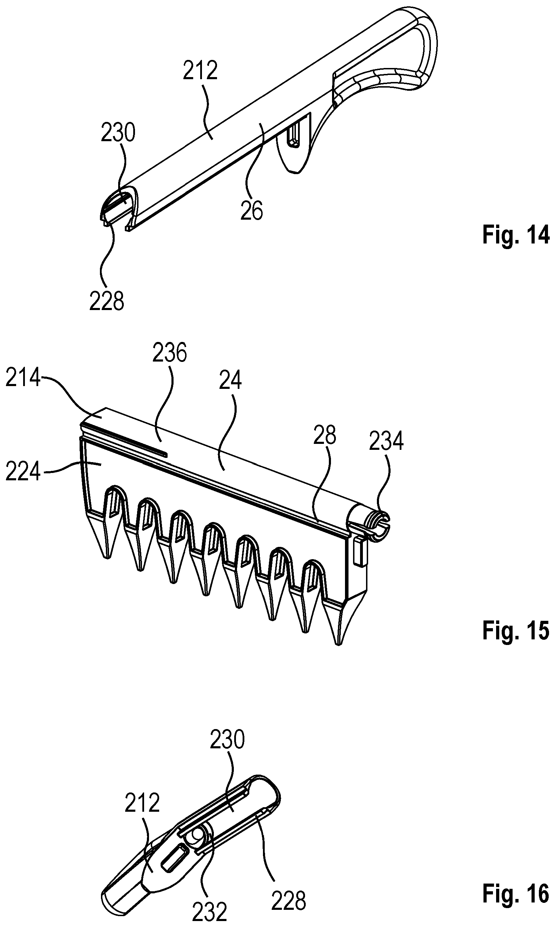

Die Fig. **14 bis 16** zeigen Details der lösbaren Verbindung zwischen Griffteil 212 und Kammteil 214. Das Griffteil 212 weist eine durch zwei Führungsleisten 228 begrenzte Führungsöffnung 230 auf, in die ein Rückenabschnitt 236 des Kammteils 214 einschiebbar ist. Der Rückenabschnitt 236 weist Nuten 28 auf, in die die Führungsleisten 228 beim Einschieben eingreifen. Die Führungsleisten 228 und die Nuten 28 bilden im zusammengesetzten Zustand des Kammes 200 eine formschlüssige Verbindung.

Eine lösbare Befestigungsvorrichtung, mittels derer der Rückenabschnitt 236 lösbar in der Führungsöffnung 230 gehalten sein kann, kann beispielsweise mittels einer Rast- oder Klemmverbindung gebildet sein. In einigen Ausführungsformen weist beispielsweise das Kammteil 214 endseitig Rastklemmen 234 auf, die zur Bildung der lösbaren Rastverbindung in Rastnuten 232 des Griffteils 212 eingreifen können.

In einigen Ausführungsformen, insbesondere in Ausführungsformen, die als Bürste 200 ausgestaltet sind, wird die auswechselbare Partikelaufnahmeeinrichtung 14 zur kommerziellen Verwertung derart vorbereitet, dass der Träger 140 und die Abnahmeeinrichtung 20 unlösbar miteinander verbunden sind. In Ausführungsformen, die als Kamm 200 ausgestaltet sind, findet diese Vorbereitung durch Einsetzen der Abnahmeeinrichtungen 20, also beispielsweise der Vliese, in die Aufnahmen 224, statt. Die derart vorbereitete Partikelaufnahmeeinrichtung 14 kann zum Austausch einer benutzten, aufgrund von begrenzter Pollenaufnahmekapazität nicht mehr effizienten Partikelaufnahmeeinrichtung 14 verwendet werden.

Die Partikelaufnahmeeinrichtung 14 derart bereitzustellen, hat gegenüber Ausführungsformen, die die Abnahmeeinrichtung 20 separat bereitstellen den Vorteil, dass die Abnahmeeinrichtung 20 beispielsweise in einem Produktionsautomaten steril eingesetzt werden kann. Wird dies durch einen Benutzer durchgeführt, dann kann dieser, beispielsweise durch Andrücken der Abnahmeeinrichtung 20 mit der Hand, diese verschmutzen, so dass deren Nutzungsdauer verkürzt ist.

In einigen Ausführungsformen sind die Griffeinrichtung und die Partikelaufnahmeeinrichtung miteinander lösbar verbunden.

Dadurch lässt sich die Partikelaufnahmeeinrichtung einfach austauschen, wenn sie beispielsweise nach längerer Verwendung keine weiteren Allergenpartikel mehr aufnehmen kann.

In einigen Ausführungsformen ist die Abnahmeeinrichtung an der Partikelaufnahmeeinrichtung lösbar befestigt

Je nach Ausführungsform erlaubt dies einen Austausch allein der Abnahmeeinrichtung, die die Allergenpartikel von den Haaren abnimmt. Dadurch wird umweltschonend der Materialverbrauch reduziert.

In einigen Ausführungsformen weist die Partikelaufnahmeeinrichtung eine Mehrzahl von Eingreifeinrichtungen zum Eingreifen zwischen eine Vielzahl von Haaren auf, wobei die Abnahmeeinrichtung an einer Oberfläche der Eingreifeinrichtungen angeordnet ist.

Dadurch wird eine Art Kamm gebildet, der durch die Haare geführt werden kann. Die Haare streichen dabei entlang der Oberfläche der Eingreifeinrichtungen, an der die Abnahmeeinrichtung angeordnet ist. Die Abnahmeeinrichtung nimmt dann die Pollenpartikel mit ihren Allergenen von den Haaren ab, die über sie gezogen werden. Somit kann durch einfaches Kämmen oder Bürsten der Haare eine allergische Reaktion reduziert, vermieden oder ihr vorgebeugt werden.

In einigen Ausführungsformen ist die Abnahmeeinrichtung derart angeordnet, dass die Oberfläche der Eingreifeinrichtungen wenigstens teilweise von der Abnahmeeinrichtung bedeckt ist.

Dadurch wird die Fläche erhöht, auf der die Haare mit der Abnahmeeinrichtung in Kontakt kommen.

In einigen Ausführungsformen sind die Eingreifeinrichtungen parallel zueinander ausgerichtet.

Wird eine derart ausgestaltete Partikelaufnahmeeinrichtung durch Haare gezogen, so wird eine besonders gleichmäßige Säuberung der Haare erreicht.

In einigen Ausführungsformen sind die Eingreifeinrichtungen auf einer ersten Seite der Partikelaufnahmeeinrichtung an einem Eingreifabschnitt angeordnet, wobei die Abnahmeeinrichtung auf wenigstens eine Mehrzahl der Eingreifeinrichtungen so aufsteckbar ist, dass sie an dem Eingreifabschnitt anliegend angeordnet ist.

Eine derartige Partikelaufnahmeeinrichtung dient beispielsweise der Bildung einer Haarbürste, je nachdem, welche Form die erste Seite aufweist. Durch das Aufstecken der Abnahmeeinrichtung auf die Eingreifeinrichtungen wird eine besonders große Oberfläche der Abnahmeeinrichtung für den Kontakt mit den Haaren bereitgestellt.

In einigen Ausführungsformen sind die Eingreifeinrichtungen entlang einer Geraden aufgereiht an der Partikelaufnahmeeinrichtung angeordnet.

Eine derartige Säuberungsvorrichtung bildet beispielsweise einen Kamm. Sie lässt sich besonders platzsparend ausgestalten, so dass ein Pollenallergiker sie beispielsweise auf Reisen mitnehmen kann.

In einigen Ausführungsformen weist die Abnahmeeinrichtung eine Rückhalteschicht zum Zurückhalten von Allergenpartikeln auf.

Derartige Rückhalteschichten weisen beispielsweise eine Oberfläche auf, an der die Allergenpartikel aufgrund einer chemischen Reaktion, beispielsweise Verkleben, und/oder eines physikalischen Vorgangs, beispielsweise durch Verhaken von feinen Strukturen, hängen bleiben und so von Haaren abgenommen werden können. Vorteilhaft ist die Rückhaltewirkung der Rückhalteschicht gegenüber Allergenpartikeln stärker als gegenüber Haaren.

In einigen Ausführungsformen weist die Rückhalteschicht ein Vlies oder ein Gewebe, insbesondere aufweisend Mikrofasern auf.

Vliese, Gewebe und Mikrofasergewebe, insbesondere Mikrofaservliesgewebe sind feinporig und weisen trotzdem eine hohe Dichte auf, durch die sie ideale Filtereigenschaften aufweisen. Zusätzlich weisen viele derartige Materialien elektrostatische Eigenschaften auf, so dass sie in ihrer Umgebung ein elektrostatisches Feld erzeugen können, durch das Allergenpartikel angezogen werden. Ein besonders vorteilhaft verwendbares Material weist PP (Polypropylen) und PAN (Polyacrylnitril)-Fasern auf.

### Bezugszeichenliste

- 10: Säuberungsvorrichtung
- 12: Griffeinrichtung
- 14: Partikelaufnahmeeinrichtung
- 16: Eingreifeinrichtung
- 18: Basisabschnitt
- 20: Abnahmeeinrichtung
- 22: Durchführabschnitt
- 24: erster Befestigungsabschnitt
- 26: zweiter Befestigungsabschnitt
- 28: Nut
- 29: Grundstruktur
- 30: erste Seite (der Partikelaufnahmeeinrichtung 14)
- 100: Bürste
- 102: unteres Gehäuseteil
- 104: oberes Gehäuseteil
- 106: Borstenhalter
- 108: Borsten
- 110: Führungsabschnitt
- 112: Führungszapfen
- 114: Führungsöffnung
- 116: Führungsschlitten
- 118: Borstenführungsöffnung
- 120: erste Führungsschiene
- 122: zweite Führungsschiene
- 124: zweite Führungszapfen
- 126: Langloch
- 128: Aktuierungsbereich
- 130: Abschlussabschnitt
- 132: Drehabschnitt
- 134: Rastnase
- 136: Rastöffnung
- 138: Rand
- 140: Träger
- 142: Vertiefung
- 144: Eingriffsmulde
- 146: Öffnung
- 148: Borstenführung
- 200: Kamm
- 212: Griffteil
- 214: Kammteil
- 216: Zinke
- 218: Basisabschnitt
- 222: Abstand
- 224: Aufnahme
- 226: Kontaktfläche
- 228: Führungsleiste
- 230: Führungsöffnung
- 232: Rastnut
- 234: Rastklemme
- 236: Rückenabschnitt

## Patentansprüche

1. Säuberungsvorrichtung (10, 100, 200) zum Entfernen von Pollen- und/oder Allergenpartikeln aus menschlichen und tierischen Haaren, aufweisend eine Griffeinrichtung (12) und eine lösbar damit verbundene Partikelaufnahmeeinrichtung (14, 214), wobei die Partikelaufnahmeeinrichtung (14, 214) eine Abnahmeeinrichtung (20) zum Entfernen der Pollen- und/oder Allergenpartikel aufweist, wobei die Säuberungsvorrichtung als Bürste (100), aufweisend wenigstens ein Gehäuseteil (102, 104), ausgestaltet ist, die eine Vielzahl von Borsten (108) aufweist, wobei die Partikelaufnahmeeinrichtung (14) eine Vielzahl von Öffnungen zur Durchführung der Borsten (108) aufweist, wodurch die Partikelaufnahmeeinrichtung (14) auf die Borsten (108) aufsteckbar ist, **dadurch gekennzeichnet, dass** die Borsten (108) auf einem beweglichen Borstenhalter (106) angeordnet sind, wobei der Borstenhalter (106) so innerhalb der Gehäuseteile (102, 104) beweglich ist, dass die Borsten (108) aus dem Gehäuseteil (102, 104) ein- und ausfahrbar sind, wobei die Borsten (108) derart in das Gehäuseteil (102, 104) einfahrbar sind, dass sie nicht oder nur geringfügig aus der Partikelaufnahmeeinrichtung (14) und/oder dem Gehäuseteil (102, 104) herausragen.

2. Säuberungsvorrichtung gemäß Anspruch 1, **dadurch gekennzeichnet, dass** eines der Gehäuseteile (102, 104) einen wenigstens teilweise umlaufenden und vorspringenden Rand (138) aufweist, der eine mechanische Rast- oder Klemmvorrichtung zur lösbaren Befestigung der Partikelaufnahmeeinrichtung (14) aufweist.

3. Säuberungsvorrichtung gemäß Anspruch 2, **dadurch gekennzeichnet, dass** in einem Bereich des Randes (138) eine Eingriffsmulde (144) vorgesehen ist, in die ein Werkzeug und/oder ein Finger zum Entfernen der Partikelaufnahmeeinrichtung aus der mechanischen Rast- oder Klemmvorrichtung einführbar ist.

4. Säuberungsvorrichtung gemäß einem der voranstehenden Ansprüche,
**dadurch gekennzeichnet, dass** die Bürste (100) einen Drehabschnitt (132) aufweist, der mittels eines Linearkonverters an einen Führungsschlitten (116) gekoppelt ist, der Führungsöffnungen (114) zur Aufnahme eines Abschnitts des Borstenhalters (106), insbesondere eines Führungszapfens (112), aufweist, wobei die Vermittlung des Linearkonverters und des Führungsschlittens (116) so ausgestaltet ist, dass sie eine Drehbewegung des Drehabschnitts (132) in eine Linearbewegung des Borstenhalters (106) und damit der Borsten (108) aus dem Gehäuseteil (102, 104) hinaus oder in dieses hinein umsetzt.

5. Säuberungsvorrichtung gemäß Anspruch 4, **dadurch gekennzeichnet, dass** die Borsten (108) in ihren Extrempositionen, also in einem komplett ausgefahrenen Zustand und in einem komplett eingefahrenen Zustand, lösbar fixierbar sind.

6. Säuberungsvorrichtung gemäß einem der voranstehenden Ansprüche,
**dadurch gekennzeichnet, dass** Abstände von Schwerpunkten der Borsten (108) beispielsweise 0,75cm bis 2,5cm, 1cm bis 1,5cm, 1,2cm bis 1,5cm, 1cm, 1,2cm, 1,25cm oder 1,5 cm betragen.

7. Säuberungsvorrichtung gemäß einem der voranstehenden Ansprüche,
**dadurch gekennzeichnet, dass** die Borsten (108) in einem Raster oder in gegeneinander versetzten Linien angeordnet sind, wobei eine Zeile eines Rasters oder eine Linie 2 bis 8, 3 bis 5 oder 3 bis 4 Borsten (108) umfasst, und wobei 10 bis 15, 11 bis 12 oder 11 Zeilen oder Linien vorgesehen sind.

8. Säuberungsvorrichtung (10, 100, 200) zum Entfernen von Pollen- und/oder Allergenpartikeln aus menschlichen und tierischen Haaren, aufweisend eine Griffeinrichtung (12) und eine lösbar damit verbundene Partikelaufnahmeeinrichtung (14, 214), wobei die Partikelaufnahmeeinrichtung (14, 214) eine Abnahmeeinrichtung (20) zum Entfernen der Pollen- und/oder Allergenpartikel aufweist, wobei die Säuberungsvorrichtung als Kamm (200) ausgestaltet ist, wobei die Griffeinrichtung (12) ein Griffteil (212) und die Partikelaufnahmeeeinrichtung (14) ein Kammteil (214), das Zinken (216) aufweist, aufweist, wobei das Kammteil (214) wenigstens eine Aufnahme (224) zur Aufnahme der Abnahmeeinrichtung (20) aufweist, **dadurch gekennzeichnet, dass** sich wenigstens eine Vertiefung als Aufnahme (224) über eine Seitenfläche des Kammteils (214) erstreckt, wobei die Seitenfläche durch einen Basisabschnitt der Zinken (216) begrenzt ist.

9. Säuberungsvorrichtung gemäß Anspruch 8, **dadurch gekennzeichnet, dass** wenigstens eine Aufnahme (214) in einer zwischen zwei Zinken (216) angeordneten Kontaktfläche (226) angeordnet ist.

10. Säuberungsvorrichtung gemäß einem der Ansprüche 8 oder 9, **dadurch gekennzeichnet, dass** die Zinken (216) eine Länge entlang des Kammteils (214) von mehr als 12mm, mehr als 15mm oder mehr als 17mm aufweisen und/oder der Abstand zwischen zwei Zinken (216) auf Höhe ihres Basisabschnitts mehr als 9mm, mehr als 10mm oder mehr als 12mm beträgt.

11. Säuberungsvorrichtung gemäß einem der Ansprüche 8 bis 10, **dadurch gekennzeichnet, dass** das Kammteil (214) fünf bis acht, drei, vier, fünf, sechs, sieben, acht, neun, zehn, elf oder zwölf Zinken (216) aufweist und/oder dass die Zinken (216) eine konische oder pyramidenartige Grundform aufweisen.

## Claims

1. Cleaning device (10, 100, 200) for removing pollen and/or allergen particles from human and animal hair, comprising a handle device (12) and a particle receiving device (14, 214) releasably connected thereto, wherein the particle receiving device (14, 214) comprises a removal device (20) for removing the pollen and/or allergen particles, wherein the cleaning device is designed as a brush (100), comprising at least one housing part (102, 104), which comprises a plurality of bristles (108), wherein the particle receiving device (14) comprises a plurality of openings for the passage of the bristles (108), whereby the particle receiving device (14) is fittable onto the bristles (108), **characterized in that** the bristles (108) are arranged on a movable bristle holder (106), wherein the bristle holder (106) is movable within the housing parts (102, 104) such that the bristles (108) are extendable out of and retractable into the housing part (102, 104), wherein the bristles (108) are retractable into the housing part (102, 104) in such a way that they do not protrude or protrude only slightly from the particle receiving device (14) and/or the housing part (102, 104).

2. Cleaning device according to claim 1, **characterized in that** one of the housing parts (102, 104) comprises an at least partially circumferential and projecting edge (138), which comprises a mechanical latching or clamping device for the releasable fastening of the particle receiving device (14).

3. Cleaning device according to claim 2, **characterized in that** in an area of the edge (138) an engagement recess (144) is provided, into which a tool and/or a finger can be inserted for removing the particle receiving device from the mechanical latching or clamping device.

4. Cleaning device according to one of the preceding claims, **characterized in that** the brush (100) comprises a rotary section (132) which is coupled by means of a linear converter to a guide slide (116) which comprises guide openings (114) for receiving a section of the bristle holder (106), in particular a guide pin (112), wherein the interaction of the linear converter and the guide slide (116) is designed such that it converts a rotational movement of the rotary section (132) into a linear movement of the bristle holder (106) and thus of the bristles (108) out of or into the housing part (102, 104).

5. Cleaning device according to claim 4, **characterized in that** the bristles (108) are releasably fixable in their extreme positions, that is, in a completely extended state and in a completely retracted state.

6. Cleaning device according to one of the preceding claims, **characterized in that** distances of centers of gravity of the bristles (108) are, for example, 0.75 cm to 2.5 cm, 1 cm to 1.5 cm, 1.2 cm to 1.5 cm, 1 cm, 1.2 cm, 1.25 cm, or 1.5 cm.

7. Cleaning device according to one of the preceding claims, **characterized in that** the bristles (108) are arranged in a grid or in mutually offset lines, wherein a row of a grid or a line comprises 2 to 8, 3 to 5, or 3 to 4 bristles (108), and wherein 10 to 15, 11 to 12, or 11 rows or lines are provided.

8. Cleaning device (10, 100, 200) for removing pollen and/or allergen particles from human and animal hair, comprising a handle device (12) and a particle receiving device (14, 214) releasably connected thereto, wherein the particle receiving device (14, 214) comprises a removal device (20) for removing the pollen and/or allergen particles, wherein the cleaning device is designed as a comb (200), wherein the handle device (12) comprises a handle part (212) and the particle receiving device (14) comprises a comb part (214) which comprises tines (216), wherein the comb part (214) comprises at least one receptacle (224) for receiving the removal device (20), **characterized in that** at least one recess as a receptacle (224) extends over a side surface of the comb part (214), wherein the side surface is bounded by a base section of the tines (216).

9. Cleaning device according to claim 8, **characterized in that** at least one receptacle (214) is arranged in a contact surface (226) arranged between two tines (216).

10. Cleaning device according to one of claims 8 or 9, **characterized in that** the tines (216) have a length along the comb part (214) of more than 12 mm, more than 15 mm, or more than 17 mm and/or the distance between two tines (216) at the level of their base section is more than 9 mm, more than 10 mm, or more than 12 mm.

11. Cleaning device according to one of claims 8 to 10, **characterized in that** the comb part (214) comprises five to eight, three, four, five, six, seven, eight, nine, ten, eleven, or twelve tines (216) and/or that the tines (216) have a conical or pyramidal basic shape.

## Revendications

1. Dispositif de nettoyage (10, 100, 200) pour enlever des particules de pollen et/ou d'allergènes des cheveux humains et des poils d'animaux, comportant un dispositif de préhension (12) et un dispositif de réception de particules (14, 214) relié de manière amovible à celui-ci, le dispositif de réception de particules (14, 214) comportant un dispositif de prélèvement (20) pour enlever les particules de pollen et/ou d'allergènes, le dispositif de nettoyage étant conçu comme une brosse (100), comportant au moins une partie de boîtier (102, 104), qui comporte une pluralité de poils (108), le dispositif de réception de particules (14) comportant une pluralité d'ouvertures pour le passage des poils (108), moyennant quoi le dispositif de réception de particules (14) est enfichable sur les poils (108), **caractérisé en ce que** les poils (108) sont disposés sur un support de poils mobile (106), le support de poils (106) étant mobile à l'intérieur des parties de boîtier (102, 104) de telle sorte que les poils (108) sont extensibles hors de la partie de boîtier (102, 104) et rétractables dans celle-ci, les poils (108) étant rétractables dans la partie de boîtier (102, 104) de telle manière qu'ils ne dépassent pas ou seulement légèrement du dispositif de réception de particules (14) et/ou de la partie de boîtier (102, 104).

2. Dispositif de nettoyage selon la revendication 1, **caractérisé en ce que** l'une des parties de boîtier (102, 104) comporte un bord (138) au moins partiellement périphérique et saillant, qui comporte un dispositif d'encliquetage ou de serrage mécanique pour la fixation amovible du dispositif de réception de particules (14).

3. Dispositif de nettoyage selon la revendication 2, **caractérisé en ce que** dans une zone du bord (138) est prévu un évidement de préhension (144) dans lequel un outil et/ou un doigt peut être introduit pour retirer le dispositif de réception de particules du dispositif d'encliquetage ou de serrage mécanique.

4. Dispositif de nettoyage selon l'une des revendications précédentes, **caractérisé en ce que** la brosse (100) comporte une section rotative (132) qui est couplée au moyen d'un convertisseur linéaire à un chariot de guidage (116) qui comporte des ouvertures de guidage (114) pour recevoir une section du support de poils (106), en particulier un tenon de guidage (112), la médiation du convertisseur linéaire et du chariot de guidage (116) étant conçue de telle sorte qu'elle transforme un mouvement de rotation de la section rotative (132) en un mouvement linéaire du support de poils (106) et donc des poils (108) hors de la partie de boîtier (102, 104) ou dans celle-ci.

5. Dispositif de nettoyage selon la revendication 4, **caractérisé en ce que** les poils (108) sont fixables de manière amovible dans leurs positions extrêmes, c'est-à-dire dans un état complètement étendu et dans un état complètement rétracté.

6. Dispositif de nettoyage selon l'une des revendications précédentes, **caractérisé en ce que** des distances entre les centres de gravité des poils (108) sont par exemple de 0,75 cm à 2,5 cm, 1 cm à 1,5 cm, 1,2 cm à 1,5 cm, 1 cm, 1,2 cm, 1,25 cm ou 1,5 cm.

7. Dispositif de nettoyage selon l'une des revendications précédentes, **caractérisé en ce que** les poils (108) sont disposés en une grille ou en lignes décalées les unes par rapport aux autres, une rangée d'une grille ou une ligne comprenant 2 à 8, 3 à 5 ou 3 à 4 poils (108), et 10 à 15, 11 à 12 ou 11 rangées ou lignes étant prévues.

8. Dispositif de nettoyage (10, 100, 200) pour enlever des particules de pollen et/ou d'allergènes des cheveux humains et des poils d'animaux, comportant un dispositif de préhension (12) et un dispositif de réception de particules (14, 214) relié de manière amovible à celui-ci, le dispositif de réception de particules (14, 214) comportant un dispositif de prélèvement (20) pour enlever les particules de pollen et/ou d'allergènes, le dispositif de nettoyage étant conçu comme un peigne (200), le dispositif de préhension (12) comportant une partie de poignée (212) et le dispositif de réception de particules (14) comportant une partie peigne (214) qui comporte des dents (216), la partie peigne (214) comportant au moins un logement (224) pour recevoir le dispositif de prélèvement (20), **caractérisé en ce qu'**au moins un renfoncement en tant que logement (224) s'étend sur une surface latérale de la partie peigne (214), la surface latérale étant délimitée par une section de base des dents (216).

9. Dispositif de nettoyage selon la revendication 8, **caractérisé en ce qu'**au moins un logement (214) est disposé dans une surface de contact (226) agencée entre deux dents (216).

10. Dispositif de nettoyage selon l'une des revendications 8 ou 9, **caractérisé en ce que** les dents (216) ont une longueur le long de la partie peigne (214) de plus de 12 mm, plus de 15 mm ou plus de 17 mm et/ou la distance entre deux dents (216) à la hauteur de leur section de base est de plus de 9 mm, plus de 10 mm ou plus de 12 mm.

11. Dispositif de nettoyage selon l'une des revendications 8 à 10, **caractérisé en ce que** la partie peigne (214) comporte de cinq à huit, trois, quatre, cinq, six, sept, huit, neuf, dix, onze ou douze dents (216) et/ou **en ce que** les dents (216) ont une forme de base conique ou pyramidale.
